# FASCICULE DE BREVET EUROPEEN

(11) **EP 1 391 228 B1**
(45) Date de publication et mention de la délivrance du brevet: **26.08.2009**
(21) Numéro de dépôt: 03292010.0
(22) Date de dépôt: 11.08.2003
(51) Int. Cl.: B01D 21/00, B01D 21/02, B01D 21/24

(54) **Installation de décantage des eaux de ruissellement avec un répartiteur hydraulique**
Anlage zur Dekantierung von Regenwasser mit einem hydraulischen Verteiler
Installation for decanting stormwater with a hydraulic distributor

(30) Priorité: 12.08.2002 FR 0210206
(43) Date de publication de la demande: 25.02.2004
(73) Titulaire: Hydroconcept, 78190 Trappes (FR)
(72) Inventeur: Morin, Antoine, 92800 Puteaux (FR)
(74) Mandataire: Cabinet HERRBURGER

(56) Documents cités:
- EP-A- 0 836 876
- US-A- 5 470 489

## Description

### Domaine de l'invention

La présente invention concerne une installation de decantage des eaux de ruissellement avec un répartiteur hydraulique comprenant une arrivée des eaux chargées (effluents) débouchant dans une chambre d'alimentation communicant avec un bassin de décantage relié par un siphon à la sortie,
- la chambre d'alimentation dont le fond constitue une fosse de collecte de matières lourdes et de boues débouche au-dessus de cette fosse à la base du bassin au-dessus de la zone de stockage des boues dans le bassin,
- le bassin est muni d'une structure de décantage à contre-courant pour créer un chemin de passage des eaux remontant dans la structure pour passer en surverse dans une chambre munie d'un siphon de sortie,
- le fond du bassin, sous la structure de décantage, incliné vers la fosse de collecte des boues est muni, du côté de la fosse, d'une cloison de retenue et d'évacuation des boues formant un volet normalement fermé pour retenir les boues, et éviter aux effluents de pénétrer dans le bassin par le fond s'ouvrant pour libérer les boues vers la fosse,
- l'entrée d'eau de la chambre d'alimentation vers le bassin est une ouverture s'étendant sur toute la largeur du bassin au-dessus de la cloison, cette ouverture étant suffisamment basse pour que l'eau chargée se calme dans la chambre avant d'arriver dans le bassin.

La pollution des effluents urbains pu temps de pluie est fixée en grande partie sur des matières solides en suspension (M.E.S.) qui décantent généralement assez bien (CHEBBO G. 1992, « Solides des rejets urbains par temps de pluies : caractérisation et traitabilité ». Thèse de doctorat de l'Ecole Nationale des Ponts et Chaussées. 217 p. + annexes).

L'une des techniques mises en oeuvre pour lutter contre les nuisances engendrées par les rejets urbains par temps de pluies consiste à installer sur le réseau des décanteurs lamellaire, afin de séparer et de retenir les matières polluantes contenues dans les eaux de ruissellement.

### Etat de la technique

Plusieurs type de décanteurs lamellaires existent :
- les décanteurs à courant croisés, ou l'eau traverse perpendiculairement des lamelles planes (boues et eaux circulent dans des directions perpendiculaires),
- les décanteurs à co-courant, ou l'eau est admise par le haut, puis descend dans les lamelles et ressort par le fond du décanteur (boues et eau circulent dans la même direction),
- les décanteurs à. contre-courant ou l'eau est admise par le bas, puis remonte dans des lamelles, et ressort par surverse en partie haute du décanteur (dans ce cas boues et eau circulent en direction opposées, voir EP 0 836 876).

Compte tenu des faibles dimensions des particules en suspension qui sont le principal vecteur de la pollution, les décanteurs lamellaires doivent présenter d'importantes surfaces de décantation. La surface de décantation est obtenue par la juxtaposition de lamelles élémentaires, disposées avec une certaine inclinaison par rapport au plan horizontal.

L'une des clés du bon fonctionnement des décanteurs lamellaires réside dans la répartition la plus homogène possible des effluents entre toutes les lamelles. Ainsi la totalité de la surface participe à la décantation. A contrario, une mauvaise répartition des effluents dans la structure lamellaire conduit à des chemins d'écoulement préférentiels, et ne permet plus de garantir les rendements en dépollution escomptés.

Lorsque le décanteur fonctionne, les matières polluantes sont séparées dans la structure lamellaire, puis elles glissent sur la face inférieure des lamelles et viennent s'accumuler au fond du décanteur.

### But de l'invention

La présente invention a pour but de remédier à ces inconvénients et se propose de développer une installation de décantage comportant un répartiteur hydraulique permettant d'assurer une répartition aussi régulière des effluents au niveau du décanteur, dans la structure de décantage pour utiliser toute la surface disponible dans cette structure sans néanmoins déranger les dépôts de boues déjà effectués ou en cours de dépôt tout en permettant l'accès facile de l'ensemble de l'installation et en particulier du bassin de décantage pour les travaux d'entretien et d'évacuations des boues.

### Objet de l'invention

A cet effet, l'invention concerne une installation du type défini ci-dessus caractérisée en ce que le répartiteur hydraulique comprend une entrée d'eau dans le bassin constituée
- en partie inférieure, par un déflecteur bordant le dessus de la cloison de retenue et d'évacuation des boues et se prolongeant vers l'aval à l'intérieur du bassin de décantage, et
- en partie supérieure, par une cloison réglable, formant avec le déflecteur, une fente d'entrée d'eau s'étendant sur toute la largeur du bassin et en dessous de la structure de décantage pour diriger les effluents au-dessus de la zone de stockage des boues et les répartir régulièrement sur toute la longueur de la structure de décantage au-dessus de la zone de stockage des boues.

Ainsi grâce à l'invention, on réalise un écoulement d'effluents suffisamment fort à la base de la structure de décantage pour que cet écoulement se répartisse sur toute la longueur (ou profondeur) de la structure de décantage et accède régulièrement à la surface de décantage offert par la structure de décantage, et cela sans perturber les boues déjà déposées au fond du bassin. Le jet d'effluents se répartit sur toute la largeur du bassin c'est-à-dire sur toute la largeur de la structure de décantage et la vitesse du jet est suffisante pour arriver jusqu'au fond du décanteur sans créer de tourbillons qui pourraient gêner la constitution des dépôts au fond du bassin.

On évite ainsi de remettre en suspension des boues déjà déposées, ce qui, dans certains cas chargerait les effluents filtrés, en sortie à un niveau éventuellement supérieur à leur teneur en matières en suspension d'entrée.

Ce guidage des effluents ne gêne nullement l'évacuation des boues de la zone de stockage grâce au volet placé sous le déflecteur et qui en position fermée retient les boues dans la zone de stockage et en position ouverte permet l'évacuation de ces boues vers la fosse de collecte. Les boues sont évacuées périodiquement sous l'effet de leur propre poids grâce à la pente du fond du bassin, ou avec un jet d'eau, par exemple un jet de rinçage produit par la lame d'eau d'un réservoir de chasse, libérée brusquement ou encore par des moyens mécaniques tels que des racleurs ou par intervention humaine, avec des outils tels que des pelles.

Suivant une autre caractéristique particulièrement avantageuse, la partie supérieure est formée d'un support fixé à la cloison séparant la chambre d'entrée du bassin de décantation, au-dessus de l'entrée dans le bassin de décantation et ce support est muni d'une articulation horizontale à laquelle est reliée un volet formant la partie supérieure, ce volet pouvant être orienté par l'articulation et bloqué dans l'orientation choisie.

Cette partie supérieure est également réglable en hauteur par rapport à la cloison de manière à modifier les possibilités de réglage du volet, ce dernier pouvant être en position horizontale mais aussi en position relevée ou abaissée, voire verticale.

De manière avantageuse, le déflecteur est installé en retrait de la partie supérieure à l'intérieur du bassin de décantation derrière l'entrée du bassin, pour que le volet de la partie supérieure, abaissé en position verticale, arrive devant le déflecteur formant une entrée d'effluents longeant le déflecteur.

La paroi supérieure selon l'invention telle que définie ci-dessus peut être une même pièce offrant les différentes possibilités de réglage évoqués ci-dessus. Il en est de même du déflecteur avec ses parties constitutives telles que le support et le prolongement, qui sont les mêmes pièces quelle que soit la position d'installation de ces moyens dans le bassin au-dessus du ou des volets d'évacuation des boues.

Dans ce cas, en aval du bassin, une chambre forme un réservoir de chasse dans lequel s'immerge la cloison siphoïde de sortie et à la base de ce réservoir de chasse, un volet débouchant dans le bassin au niveau de la zone d'accumulation des boues.

Suivant une autre caractéristique la structure de décantage est une structure lamellaire formée de lames parallèles inclinées pour créer un chemin de passage des eaux remontant entre les lamelles.

La structure de décantage peut également être constituée par une structure tubulaire travaillant toujours à contre-courant : les particules se déposent alors que les effluents remontent.

Suivant une autre caractéristique avantageuse, la partie supérieure est réglable en hauteur par rapport au déflecteur pour régler l'épaisseur du jet et alimenter d'une manière efficace et surtout régulière, l'ensemble de la structure lamellaire sur toute sa longueur.

Pour faciliter l'accès à la zone du bassin, il est prévu une porte d'accès située au-dessus du déflecteur pour permettre d'accéder dans le bassin, sous la structure de décantage.

Suivant une autre caractéristique, le déflecteur comporte des volets mobiles.

### Dessins

La présente invention sera décrite ci-après de manière plus détaillée à l'aide d'exemples de réalisation représentés dans les dessins annexés dans lesquels :
- la figure 1 est une coupe longitudinale verticale d'une installation de décantage selon l'invention,
- la figure 2 est une coupe transversale de l'installation au niveau de la chambre d'alimentation.
- la figure 3 est une vue de détail de la partie de l'installation au niveau du déflecteur à l'entrée des effluents dans le bassin de décantage,
- les figures 4, 5, 6 sont trois vues en coupe partielle au niveau du déflecteur à l'entrée des effluents, montrant trois positions de réglage,
- la figure 7 est une vue en coupe partielle du type de celle de la figure 4, pour un autre montage du déflecteur à l'entrée du bassin.

### Description d'un mode de réalisation préférentiel

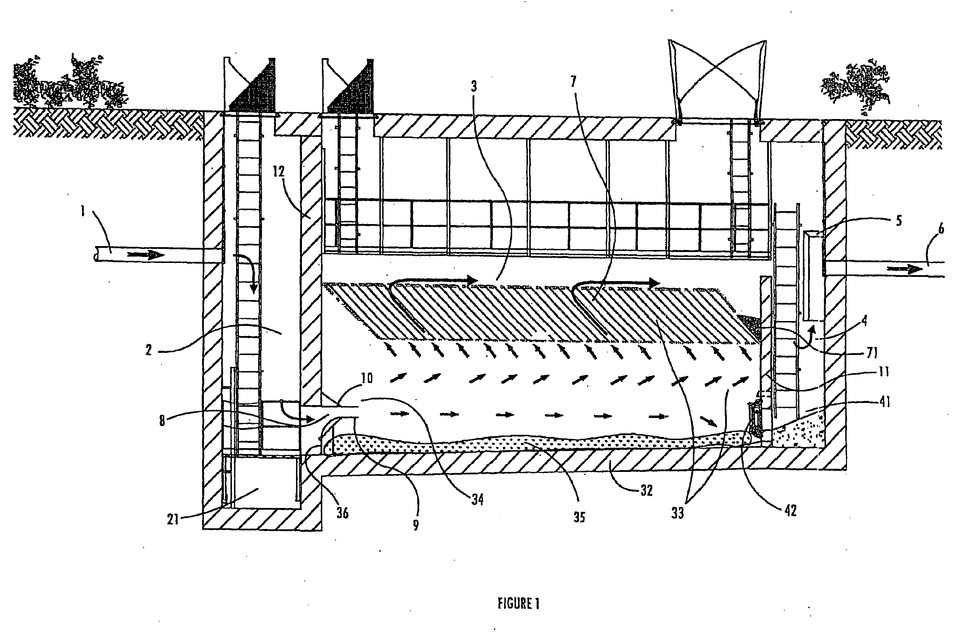

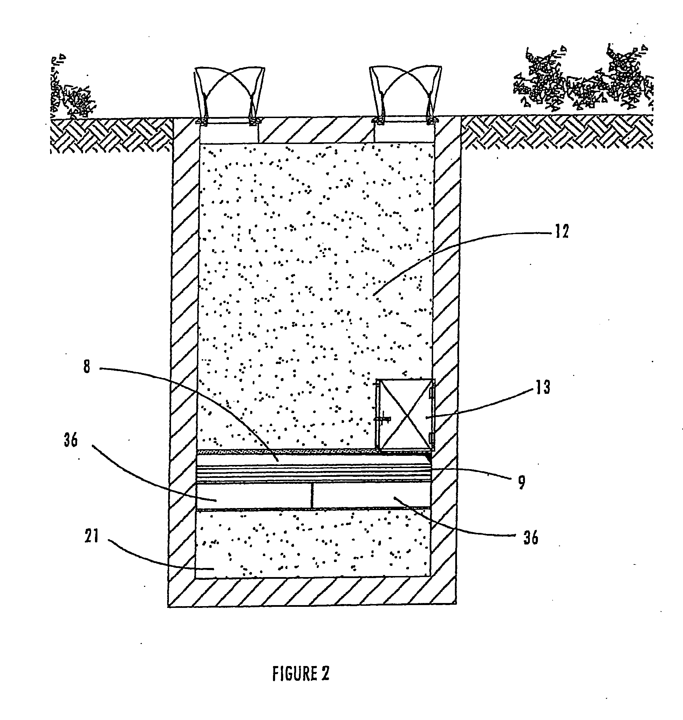

Selon les figures 1 et 2, l'invention concerne une installation de décantage des eaux en particulier des eaux de ruissellement, elle comporte une arrivée d'eau 1 par exemple un tuyau, débouchant dans une chambre d'alimentation 2 communiquant avec un bassin de décantage 3 relié en sortie à une chambre 4 formant réservoir de chasse et muni d'une cloison siphoïde 5 dans laquelle débouche la conduite de sortie 6.

Les eaux chargées de matières en suspension (effluents) arrivent par la conduite d'alimentation 1 pour passer dans la chambre d'alimentation 2 dans laquelle la vitesse de circulation se ralentit fortement. Les plus grandes particules lourdes ou les objets lourds se déposent dans cette chambre 2 puis les effluents passent dans le bassin de décantage 3 pour traverser la structure de décantage 7 et passer en surverse dans la chambre formant réservoir de chasse 4 d'où l'eau débarrassée en grande partie de ses particules solides sort par la cloison siphoïde 5 et le tuyau de sortie 6. Le cheminement de l'eau est indiqué par des flèches.

De manière plus détaillée, la chambre d'alimentation 2 constitue un puits dont le fond forme une fosse de collecte 21 des matières lourdes et des boues. Les matières lourdes arrivant de la canalisation 1, tombent sous l'effet de leur poids directement dans cette fosse de collecte 21. On y décharge également les boues séparées des effluents dans les conditions qui seront vues ultérieurement.

La fosse 21 est évacuée périodiquement lors des opérations de nettoyage. L'évacuation se fait, en général, par une pompe car les matières sont, restées au moins pâteuses puisque l'installation est remplie d'eau même en l'absence d'arrivée par la conduite d'alimentation 1. Pour le nettoyage et l'évacuation des boues, on pompe l'eau puis les boues recueillies dans la fosse 21.

La chambre d'alimentation 2 communique par une entrée 8 avec le bassin de décantation 3. Cette entrée s'étend sur toute la largeur du bassin de décantation 3 équipé en partie haute c'est-à-dire juste en dessous du niveau de la conduite de sortie 6, d'une structure de décantage 7 constituée dans cet exemple par une structure lamellaire formée de lames parallèles définissant entre elles des passages pour les effluents. Ces passages sont dits à contre-courant car les effluents remontent à travers ces passages alors que les particules de matières sèches transportées par les effluents se déposent lorsque les effluents sont en régime laminaire ; les particules descendent dans l'intervalle entre ces lamelles et tombent au fond du bassin.

De telles installations sont connues en soi et ne nécessitent pas de description plus détaillée.

Il suffit simplement de remarquer que les lamelles de la structure 7 sont d'inclinaison fixe ou variable. Dans le cas représenté, leur inclinaison est commandée par un flotteur 71 qui remonte à l'intérieur du bassin de décantage 3 lorsque le niveau de liquide remonte et arrive au niveau maximum permettant le fonctionnement de l'installation et inclinant les lamelles.

Au contraire lorsque le bassin de décantation 3 n'est pas suffisamment rempli d'effluents ou vide, les lames sont plus ou moins fortement inclinées jusqu'à la position verticale lorsqu'elles sont au repos. Les dépôts sur les lames peuvent alors tomber au fond du bassin où se trouvent déjà les particules déposées normalement à contre courant lorsque le décanteur fonctionne.

Selon un autre mode de réalisation non représenté, la structure de décantage est constituée par des faisceaux de tubes créant également des passages à écoulement laminaire traversés par les effluents de bas en haut et le dépôt des particules se faisant par gravité, toujours à contre courant.

La structure de décantage est située à un niveau du fond 32 du bassin, suffisant pour qu'une personne de taille habituelle puisse se tenir debout.

Le fond 32 du bassin est incliné de l'aval 33 vers l'amont 34 (de la droite vers la gauche selon la figure 1) dans le sens descendant pour constituer une légère pente par exemple de l'ordre de 3 %.

Le fond 32 du bassin 3 constitue la zone d'accumulation 35 des boues. Cette couche de boues est retenue dans cette zone 35 entre deux nettoyages.

La zone des boues est délimitée à l'avant par une cloison 36 surmontée d'un déflecteur bombé 9 constituant la partie inférieure de l'entrée d'effluents 8. En partie supérieure, une cloison 10, de préférence réglable et ici sensiblement horizontale, définit avec le déflecteur 9 une entrée formant une lame d'effluents s'étendant sur toute la largeur du bassin 3 (direction perpendiculaire à la feuille du dessin de la figure 1).

La cloison 10 est réglable en hauteur pour définir la hauteur de l'intervalle avec le déflecteur 9 et régler ainsi la vitesse d'arrivée des effluents dans le bassin de décantage pour que le jet se répartisse aussi loin que possible jusqu'à l'extrémité du bassin. La circulation des effluents dans la chambre, à travers l'entrée 8 et entre le déflecteur hydraulique 9 et la cloison horizontale 10 est représentée par des flèches de même que la circulation des effluents sous la structure lamellaire et à travers celle-ci.

En aval, le bassin 3 est fermé par une cloison 11 qui délimite la chambre formant le réservoir de chasse 4. Le fond 41 de cette chambre est incliné pour diriger le jet de chasse sortant par le volet de chasse 42. Pour nettoyer le fond 32 du bassin, on peut évacuer mécaniquement les boues. On peut également utiliser l'eau retenue dans le réservoir de chasse 4. Après un premier nettoyage et dégagement des boues de la zone d'accumulation au fond du bassin cet effet de chasse peut également servir pour rincer la dalle.

La vue en coupe de la figure 2 montre la cloison 12 séparant la chambre d'entrée 2 du bassin. Cette cloison 12 comporte une porte d'accès 13 pour arriver au fond du bassin de décantation. Cette porte surmonte l'entrée 8, transversale, au-dessus du déflecteur 9 et du volet réglable n'apparaissant pas ici.

Sous le déflecteur 9, on voit la cloison formée par les deux volets 36 pour l'évacuation des boues 35 du bassin ainsi que la fosse de collecte 21.

Cette cloison 36 est surtout destinée à éviter aux effluents de pénétrer dans le bassin 3 par le fond tout en permettant l'évacuation des boues vers la fosse.

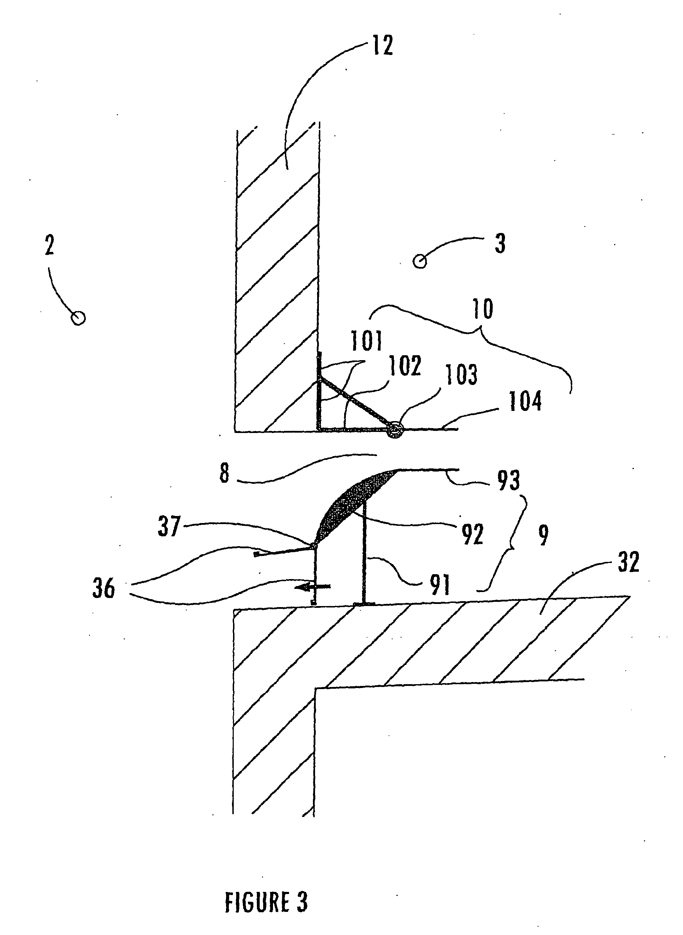

La figure 3 est une vue en coupe à échelle agrandie de l'entrée 8 du bassin 3 à partir de la chambre 2, au niveau de la cloison 12. Cette figure montre l'entrée 8 avec le déflecteur 9 au-dessus du ou des volets 36 d'évacuation des boues. Le volet 36 est représenté à la fois en position verticale et en position relevée autour d'une charnière horizontale 37 par l'évacuation des bras.

Le déflecteur 9 qui surmonte le ou les volets 36 est formé d'une partie cintrée 92 de section cylindrique d'axe transversal, se poursuivant par une partie arrière 93 droite. La partie supérieure 10 se compose d'un équipement formé de pattes de fixation 101 permettant la fixation à la cloison 102 au-dessus de l'ouverture 8. Ces pattes 101 portent une partie inférieure 102, horizontale, se prolongeant à l'intérieur du bassin et terminée par une charnière ou articulation 103 portant un volet 104. Cette charnière 103 ou le volet 104 se bloquent dans l'orientation choisie.

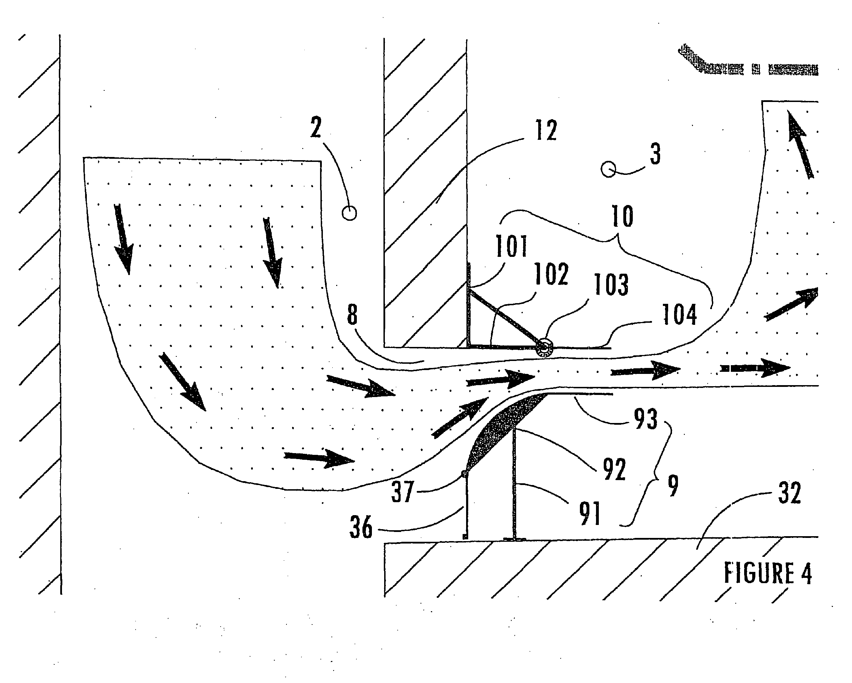

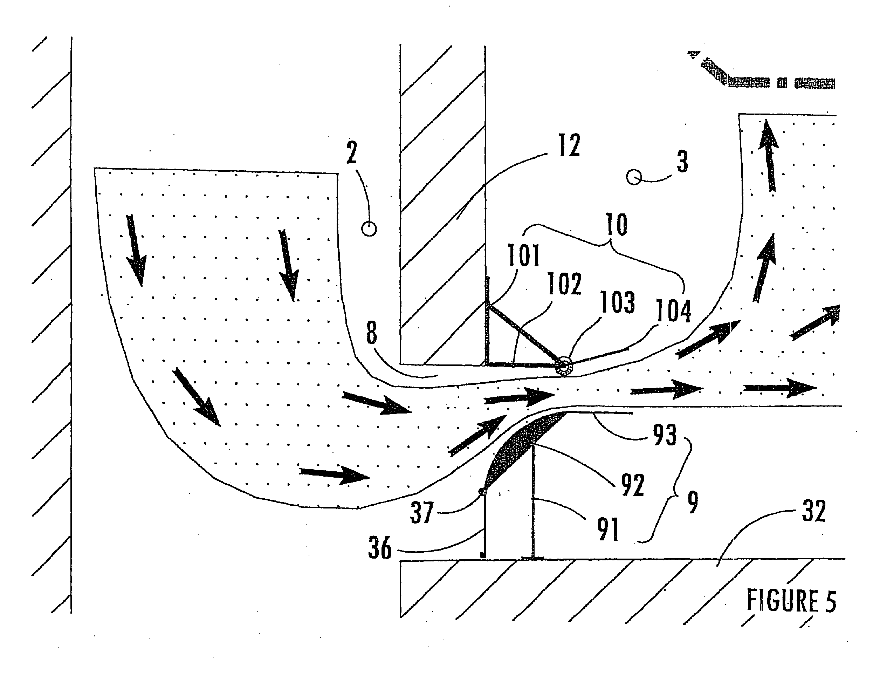

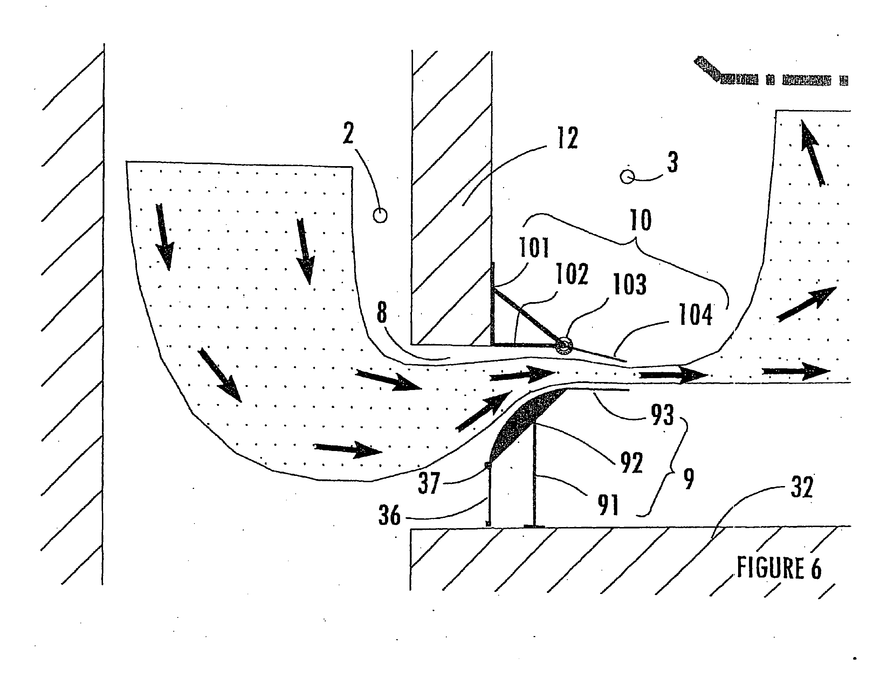

Les figures 4, 5, 6 sont des vues en coupe identiques montrant trois positions d'orientation différentes du volet 104 de la partie supérieure réglable 10. A la figure 4, le volet 104 est en position horizontale. A la figure 5, le volet 104 est légèrement relevé et à la figure 6, le volet 104 est légèrement abaissé de manière à ouvrir ou fermer le passage des effluents et mieux répartir ceux-ci sur toute la zone de décantage.

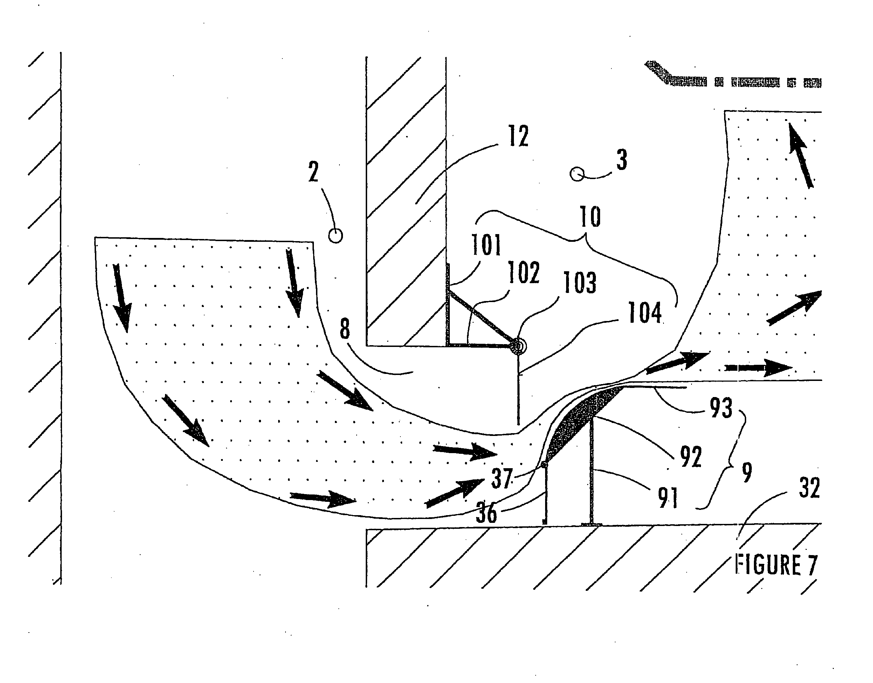

La figure 7 montre un autre mode de réalisation de l'entrée 8 du bassin 3 à partir de la chambre d'entrée 2 au niveau de la cloison 12. La partie supérieure 10 est identique au mode de réalisation précédent ; elle se compose de pattes 101 de fixation à la cloison verticale 12, d'une partie horizontale 102 portant une articulation 103 à laquelle est relié le volet 104. Dans ce cas, le volet 104 est dirigé vers le bas, ici dans la direction verticale, pour venir devant la partie bombée 92 du déflecteur 9 et accrocher la veine de fluide sur la partie bombée 92 pour créer une meilleure répartition des effluents en aval du déflecteur. Les autres parties de l'installation sont les mêmes que précédemment et portent les mêmes références.

Selon les caractéristiques du bassin de la zone de décantage, des quantités d'effluents à traiter et de leur débit, la cloison supérieure 10 sera réglée dans l'une des positions représentées aux figures 4 à 7. Le réglage de la cloison supérieure 10 se fait non seulement au niveau de l'articulation 103 qui permet de bloquer le volet 104 dans une certaine position angulaire mais également dans la direction verticale comme l'indique la double flèche. Ce réglage vertical peut se faire à l'aide de trous oblongs réalisés dans les pattes d'accrochage 101 et qui permet de bloquer les pattes d'accrochage à un niveau de hauteur déterminé. Il est également possible de choisir un autre mode de réalisation des pattes 101 pour permettre ce réglage en hauteur de la position du volet 104 que celui-ci soit horizontal, incliné ou vertical.

Il convient de remarquer que, dans ce mode de réalisation, le volet 36 et le déflecteur bombé 92 qui le surmonte sont décalés par rapport à la fenêtre d'entrée 8 pour permettre au volet 104, dans la position représentée dans cette figure, de venir avec son bord inférieur en amont du déflecteur 92.

## Revendications

1. Installation de décantage des eaux de ruissellement avec un répartiteur hydraulique comprenant une arrivée des eaux chargées (effluents) débouchant dans une chambre d'alimentation (2) communicant avec un bassin de décantage (3) relié par un siphon (5) à la sortie (6),
- la chambre d'alimentation (2) dont le fond constitue une fosse (21) de collecte de matières lourdes et de boues débouche au-dessus de cette fosse à la base du bassin au-dessus de la zone de stockage des boues dans le bassin (3),
- le bassin (3) est muni d'une structure de décantage à contre-courant (7) pour créer un chemin de passage des eaux remontant dans la structure pour passer en surverse (11) dans une chambre (4) munie d'un siphon de sortie,
- le fond (32) du bassin (3), sous la structure de décantage (7), incliné vers la fosse (21) de collecte des boues est muni, du côté de la fosse, d'une cloison de retenue et d'évacuation des boues formant un volet (36) normalement fermé pour retenir les boues, et éviter aux effluents de pénétrer dans le bassin (3) par le fond ouvrable pour libérer les boues vers la fosse,
- l'entrée d'eau (8) de la chambre d'alimentation (2) vers le bassin (3) est une ouverture s'étendant sur toute la largeur du bassin au-dessus de la cloison (36), cette ouverture étant suffisamment basse pour que l'eau
chargée se calme dans la chambre (2) avant d'arriver dans le bassin (3),
**caractérisée en ce que**
le répartiteur hydraulique comprend une entrée d'eau (8) dans le bassin (3) constituée
- en partie inférieure, par un déflecteur (9, 91-93) bordant le dessus de la cloison de retenue des boues (36) et se prolongeant vers l'aval à l'intérieur du bassin de décantage (3), et
- en partie supérieure (10), par une cloison réglable (101, 104), formant avec le déflecteur (9, 91-93), une fente d'entrée d'eau s'étendant sur toute la largeur du bassin (3) et en dessous de la structure de décantage (7) pour diriger les effluents au-dessus de la zone de stockage des boues (35) et les répartir régulièrement sur toute la longueur de la structure de décantage (7) au-dessus de la zone de stockage des boues (35).

2. Installation de décantage selon la revendication 1,
**caractérisée en ce que**
la structure de décantage (7) est une structure lamellaire formée de lames parallèles inclinées pour créer un chemin de passage des eaux remontant entre les lamelles à contre courant du dépôt des matières en suspension dans l'eau.

3. Installation de décantage selon la revendication 1,
**caractérisée en ce que**
la structure de décantage est une structure tubulaire.

4. Installation de décantage selon la revendication 1,
**caractérisée en ce que**
la partie supérieure (10) est réglable en hauteur (101) par rapport au déflecteur (9) pour régler l'épaisseur et la nature du jet d'effluents.

5. Installation de décantage selon la revendication 4,
**caractérisée en ce que**
la partie supérieure (10) est formée d'un support (101, 102) fixé à la cloison (12) au-dessus de l'entrée (8) du bassin de décantation (3) et portant par une articulation (103), un volet (104), l'articulation (103) ayant un axe horizontal et permettant de régler le volet dans une orientation déterminée dans laquelle le réglage peut se bloquer.

6. Installation de décantage selon la revendication 4,
**caractérisée en ce que**
le déflecteur (9, 92, 93) est décalé à l'intérieur du bassin derrière l'entrée (8) par rapport à la paroi supérieure (10) et celle-ci est réglée avec son volet (104) en position verticale, pour définir une fente d'arrivée des effluents à partir de la chambre d'entrée (2) qui est appliquée contre le déflecteur (92).

7. Installation de décantage selon la revendication 1,
**caractérisée par**
une porte (13) d'accès au bassin (3), cette porte étant située au-dessus du déflecteur (9) dans la cloison (12) séparant la chambre d'alimentation (2) et le bassin (3).

8. Installation de décantage selon la revendication 1,
**caractérisée en ce qu'**
en aval du bassin, une chambre (4) forme un réservoir de chasse dans lequel s'immerge la cloison siphoïde (5) de sortie et à la base de ce réservoir de chasse, un volet (42) débouchant dans le bassin (3) au niveau de la zone d'accumulation des boues (35).

## Claims

1. Stormwater clarification installation having a hydraulic distributor comprising an inlet for the loaded water (effluent) which opens into a feed chamber (2) which communicates with a settling tank (3) connected by a siphon (5) to the outlet (6),
- the feed chamber (2), the bottom of which constitutes a collecting pit (21) for heavy material and sludge, opens above the pit at the base of the tank above the sludge storage zone in the tank (3),
- the tank (3) is equipped with a countercurrent clarification structure (7) for creating a path for passage of the water which rises in the structure and passes at an overflow (11) into a chamber (4) equipped with an outlet siphon,
- the bottom (32) of the tank (3), beneath the clarification structure (7), inclined towards the sludge collecting pit (21), is equipped, on the pit side, with a sludge retaining and evacuating partition which forms a flap (36) which is normally closed in order to retain the sludge and prevent the effluent from entering the tank (3) through the bottom, which can be opened to release the sludge into the pit,
- the water inlet (8) from the supply chamber (2) to the tank (3) is an opening which extends over the entire width of the tank above the partition (36), the opening being sufficiently low that the loaded water calms down in the chamber (2) before entering the tank (3),
**characterised in that**
the hydraulic distributor comprises a water inlet (8) into the tank (3) which is constituted
- in its lower portion by a deflector (9, 91-93) which borders the top of the sludge retaining partition (36) and extends downstream inside the settling tank (3), and
- in its upper portion (10) by an adjustable partition (101, 104) which forms, with the deflector (9, 91-93), a water inlet slot which extends over the entire width of the tank (3) and beneath the clarification structure (7) in order to direct the effluent above the sludge storage zone (35) and distribute it evenly over the entire length of the clarification structure (7) above the sludge storage zone (35).

2. Clarification installation according to claim 1,
**characterised in that**
the clarification structure (7) is a lamellar structure formed by parallel vanes which are inclined to create a path for passage of the water which rises between the vanes countercurrently to the settling of the material suspended in the water.

3. Clarification installation according to claim 1,
**characterised in that**
the clarification structure is a tubular structure.

4. Clarification installation according to claim 1,
**characterised in that**
the upper portion (10) is adjustable in terms of height (101) relative to the deflector (9) in order to adjust the thickness and the nature of the jet of effluent.

5. Clarification installation according to claim 4,
**characterised in that**
the upper portion (10) is formed by a support (101, 102) which is fixed to the partition (12) above the inlet (8) of the settling tank (3) and carries, by way of a joint (103), a flap (104), the joint (103) having a horizontal axis and permitting adjustment of the flap in a given orientation in which the adjustment can be locked.

6. Clarification installation according to claim 4,
**characterised in that**
the deflector (9, 92, 93) is offset inside the tank behind the inlet (8) relative to the upper wall (10) and the latter is adjusted with its flap (104) in the vertical position in order to define an inlet slot for the effluent from the inlet chamber (2) which is applied against the deflector (92).

7. Clarification installation according to claim 1,
**characterised by**
an access door (13) to the tank (3), the door being situated above the deflector (9) in the partition (12) separating the feed chamber (2) and the tank (3).

8. Clarification installation according to claim 1,
**characterised in that**
downstream of the tank, a chamber (4) forms a flushing tank in which there is immersed the siphoid outlet partition (5) and at the base of the flushing tank, a flap (42) opening into the tank (3) at the level of the sludge accumulation zone (35).

## Patentansprüche

1. Anlage zur Dekantierung von Regenwasser mit einem hydraulischen Verteiler, die eine Zuleitung für Abwässer aufweist, welche in eine Zufuhrkammer (2) mündet, welche mit einem Dekantierungsbecken (3) verbunden ist, das über einen Siphon (5) mit dem Austritt (6) in Verbindung steht,
- die Zufuhrkammer (2), deren Boden eine Sammelgrube (21) für schwere Materialien und Schlamm bildet, mündet oberhalb dieser Grube unten im Becken oberhalb der Lagerungszone für den Schlamm in das Becken (3),
- das Becken (3) ist mit einer Gegenstrom-Dekantierungskonstruktion (7) ausgestattet, um einen Wasserdurchgang zu schaffen, der in der Konstruktion nach oben führt, und im Überlauf (11) in eine Kammer (4) führt, die mit einem Austrittssiphon versehen ist,
- der Boden (32) des Beckens (3) unter der Dekantierungskonstruktion (7), der zu der Sammelgrube (21) für den Schlamm hin geneigt ist, ist auf der Seite der Grube mit einer Rückhaltetrennwand und Wand zum Abzug des Schlamms versehen, die aus einer Klappe (36) besteht, welche normalerweise geschlossen ist, um den Schlamm zurückzuhalten, und zu verhindern, dass das Abwasser durch den beweglichen Boden in das Becken (3) eindringen kann, um den Schlamm zu der Grube hin freizusetzen,
- bei dem Wassereintritt (8) aus der Zufuhrkammer (2) zum Becken (3) hin handelt es sich um eine Öffnung, die sich über die gesamte Breite des Beckens oberhalb der Trennwand (36) erstreckt, wobei diese Öffnung niedrig genug liegt, damit sich das Abwasser in der Kammer (2) beruhigt, bevor es in dem Becken (3) ankommt,
**dadurch gekennzeichnet, dass** der hydraulische Verteiler einen Wassereintritt (8) in das Becken (3) umfasst,
- der in seinem unteren Teil aus einem Deflektor (9, 91 - 93) besteht, der die Oberseite der Rückhaltetrennwand für den Schlamm (36) säumt, und sich stromabseitig in das Innere des Dekantierungsbeckens (3) fortsetzt, und
- der in seinem oberen Teil (10) aus einer verstellbaren Trennwand (101, 104) besteht, die zusammen mit dem Deflektor (9, 91-93) einen Schlitz für den Wassereintritt bildet, der sich über die gesamte Breite des Beckens (3) und unterhalb der Dekantierungskonstruktion (7) erstreckt, um die Abwässer oberhalb der Lagerungszone des Schlammes (35) zu lenken, und sie gleichmäßig über die gesamte Länge der Dekantierungskonstruktion (7) oberhalb der Lagerungszone der Schlämme (35) zu verteilen.

2. Anlage zur Dekantierung nach Anspruch 1, **dadurch gekennzeichnet, dass** es sich bei der Dekantierungskonstruktion (7) um eine Lamellarkonstruktion handelt, die aus parallelen, geneigten Lamellen besteht, um einen Wasserdurchgang zu schaffen, der zwischen den Lamellen im Gegenstrom zu der Ablagerung der Stoffe, die sich in dem Wasser in Suspension befinden, ansteigt.

3. Anlage zur Dekantierung nach Anspruch 1, **dadurch gekennzeichnet, dass** es sich bei der Dekantierungskonstruktion um eine rohrförmige Konstruktion handelt.

4. Anlage zur Dekantierung nach Anspruch 1, **dadurch gekennzeichnet, dass** der obere Teil (10) gegenüber dem Deflektor (9) in der Höhe (101) verstellbar ist, um die Stärke und die Art des Wasserstrahls der Abwässer zu regulieren.

5. Anlage zur Dekantierung nach Anspruch 4, **dadurch gekennzeichnet, dass** der obere Teil (10) aus einer Halterung (101, 102) gebildet ist, die oberhalb des Eintritts (8) des Dekantierungsbeckens (3) an der Trennwand (12) befestigt ist, und über eine Gelenkverbindung (103) eine Klappe (104) aufweist, wobei die Gelenkverbindung (103) eine horizontale Achse besitzt und die Klappe eine bestimmte Ausrichtung erhalten kann, in der die Einstellung blockiert werden kann.

6. Anlage zur Dekantierung nach Anspruch 4, **dadurch gekennzeichnet, dass** der Deflektor (9, 92, 93) in dem Becken hinter dem Eintritt (8) gegenüber der oberen Wandung (10) versetzt ist, und diese mit der Klappe (104) in vertikaler Position verstellt wird, um einen Schlitz für den Eintritt der Abwässer aus der Eintrittskammer (2) zu bilden, der gegen den Deflektor (92) gedrückt wird.

7. Anlage zur Dekantierung nach Anspruch 1, **gekennzeichnet durch** eine Zugangstür (13) zu dem Becken (3), wobei sich diese Tür oberhalb des Deflektors (9) in der Trennwand (12) befindet, die die Zufuhrkammer (2) und das Becken (3) voneinander trennt.

8. Anlage zur Dekantierung nach Anspruch 1, **dadurch gekennzeichnet, dass** eine Kammer (4) hinter dem Becken einen Spülkasten bildet, in den der Siphon (5) eintaucht, und am Boden dieses Spülkastens eine Klappe (42) im Bereich der Anhäufung der Schlämme (35) in das Becken (3) mündet.
